(19) Europäisches Patentamt
European Patent Office
Office européen des brevets

(11) **EP 3 932 859 A1**

(12) **EUROPEAN PATENT APPLICATION**
published in accordance with Art. 153(4) EPC

(43) Date of publication:
**05.01.2022 Bulletin 2022/01**

(21) Application number: **20837249.0**

(22) Date of filing: **09.07.2020**

(51) Int Cl.:
***C01B 21/064*** *(2006.01)* ***C08K 9/06*** *(2006.01)*
***C08L 101/00*** *(2006.01)*

(86) International application number:
**PCT/JP2020/026814**

(87) International publication number:
**WO 2021/006310 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.07.2019 JP 2019129353**

(71) Applicant: **Showa Denko K.K.**
**Tokyo 105-8518 (JP)**

(72) Inventors:
- **MINORIKAWA Naoki**
  **Yokohama-shi, Kanagawa 221-8517 (JP)**
- **KOBAYASHI Ikue**
  **Yokohama-shi, Kanagawa 221-8517 (JP)**
- **OTSUKA Yuki**
  **Yokohama-shi, Kanagawa 221-8517 (JP)**

(74) Representative: **Strehl Schübel-Hopf & Partner**
**Maximilianstrasse 54**
**80538 München (DE)**

(54) **METHOD FOR PRODUCING SILICA-COATED BORON NITRIDE PARTICLES AND SILICA-COATED BORON NITRIDE PARTICLES**

(57) The purpose of the invention is to provide a method of manufacturing a silica-coated boron nitride particle, the method being capable of manufacturing a silica-coated boron nitride particle having improved moisture resistance and adhesiveness in which high thermal conductivity inherent to a boron nitride particle is maintained; a method of manufacturing a heat dissipating resin composition containing the silica-coated boron nitride particle; and the silica-coated boron nitride particle. The invention provides a method of manufacturing a silica-coated boron nitride particle including a boron nitride particle and a silica coating covering the surface of the boron nitride particle, said method comprising a first step of covering the surface of the boron nitride particle with an organic silicone compound including a specific structure and a second step of heating the boron nitride particle covered with the organic silicone compound at a temperature of 500°C or more and 1000°C or less, thereby allowing boron nitride particles coated with a rigid, homogeneous, and ultra-thin film silica to be obtained.

FIG. 1

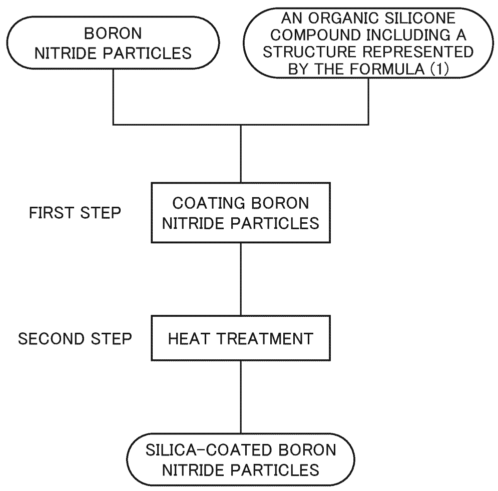


EP 3 932 859 A1

## Description

TECHNICAL FIELD

The present invention relates to a silica-coated boron nitride particle and a method of manufacturing the silica-coated boron nitride particle, and also relates to a method of manufacturing a heat dissipating resin composition containing the silica-coated boron nitride particle.

BACKGROUND ART

Boron nitride has high thermal conductivity and excellent electrical insulating properties. In particular, boron nitride having a hexagonal structure has a layered structure as in graphite, and may be synthesized with relative ease. Further it is characterized by being excellent in thermal conductivity, electrical insulating properties, low dielectric constant, solid lubricating properties, chemical stability, and thermal resistance. This makes boron nitride to be a promising material as a filler in a resin composition used for those products such as heat dissipation sheets (heat dispersing sheets), thermally conducive insulating sheets and sealing agents for electronic parts. However, boron nitride may undergo hydrolysis upon reacting with moisture, resulting in denaturization into boron oxide which has low thermal conductivity. The hydrolysis of boron nitride may also generate ammonia which is corrosive.

The hydrolysis of boron nitride may even be promoted in the presence of atmospheric moisture. Under conditions of high temperature and high humidity, boron nitride-containing products, therefore, may suffer from not only decrease in moisture resistance and/or thermal conductivity but also corrosion due to ammonia generated by the hydrolysis of boron nitride. These may result in deteriorated performance.

Technologies for improving boron nitride in terms of moisture resistance have been proposed, including: for example, a method involving allowing aggregation of primary particles of hexagonal boron nitride to form secondly aggregated particles (for example, see Patent Document 1); a method in which surface treatment is performed with a silane coupling agent having an amino group or a mercapto group (for example, see Patent Document 2); a method in which surface treatment is performed with a silane coupling agent having a vinyl group, allowing for assembly without orientational preference (for example, see Patent Document 3); a method involving performing mechanochemical treatment with a coupling agent such as a silane coupling agent (for example, see Patent Document 4); a method in which primary particles of hexagonal boron nitride treated with a coupling agent are piled together via the (0001) plane to allow for aggregation (for example, see Patent Document 5); and the like. Also proposed is an attempt for improving hydrophobicity by surface-modifying boron nitride particles using a cyclic silicone compound (Patent Document 6).

Patent Document 1: Japanese Unexamined Patent Application, Publication No. 2016-127046
Patent Document 2: Japanese Patent No. 4070345
Patent Document 3: Japanese Unexamined Patent Application, Publication No. 2012-56818
Patent Document 4: Japanese Unexamined Patent Application, Publication No. 2015-71730
Patent Document 5: Japanese Unexamined Patent Application, Publication No. 2018-30752
Patent Document 6: Japanese Patent No. 5074012

DISCLOSURE OF THE INVENTION

Problems to be Solved by the Invention

Nonetheless, conventional technologies suffer from the following problems. The boron nitride powders according to the aforementioned conventional technologies are allowed to aggregate or form a coating layer, a surface-modified layer, or the like formed with a coupling agent in order to improve moisture resistance. As a result, moisture resistance has not been improved to a sufficient level albeit some degree of improvement has been shown. Rather, a coating used as a means for improving moisture resistance often decreases the thermal conductivity of the original boron nitride, and also often results in decreased adhesiveness when these boron nitride powders are blended in various materials as fillers. Disadvantageously, it is also difficult for them to be blended with various materials at a high filling rate when used as fillers. It is noted that the method as described in Patent Document 6, which may be viewed as technology which can further be applied to various chemical modifications, starting from active hydrogen arising from cyclic silicone, completely differs in the technical philosophy and focuses from the treatment method according to an embodiment of the present invention as described below where an ultra-thin layer is formed by calcination. The method as described in Patent Document 6 improved moisture resistance to some extent, but a coating applied on a surface deteriorated thermal conductivity otherwise inherited to boron nitride.

The present invention is made in order to solve the aforementioned problems. An object of the present invention is to provide a method of manufacturing a silica-coated boron nitride particle, the method being capable of manufacturing a silica-coated boron nitride particle having improved moisture resistance and adhesiveness in which high thermal conductivity inherent to a boron nitride particle is maintained; a method of manufacturing a heat dissipating resin composition containing the silica-coated boron nitride particle; and the silica-coated boron nitride particle.

Means for Solving the Problems

After extensive studies, the present inventors found that coating a boron nitride particle with a specific organic silicone compound in accordance with a specific method can solve the aforementioned problems. Then the present invention has been completed. That is, the present invention can be implemented in the following ways.

[1] A method of manufacturing a silica-coated boron nitride particle including a boron nitride particle and a silica coating covering the surface of the boron nitride particle, the method including: a first step of covering the surface of the boron nitride particle with an organic silicone compound including a structure represented by the following formula (1):

[Chem. 1]

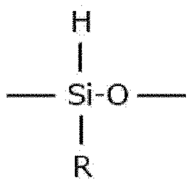

· · · (1)

wherein in the formula (1), R is an alkyl group having a carbon number of 4 or less; and a second step of heating the boron nitride particle covered with the organic silicone compound at a temperature of 500°C or more and 1000°C or less, in which the content of carbon atoms in the silica-coated boron nitride particle is 1000 or less ppm by mass.

[2] The method of manufacturing a silica-coated boron nitride particle according to [1], wherein a value of the mass (μg) of silicon atoms per $m^2$ of the surface area of the boron nitride particle is 50 or more and 500 or less ($\mu g/m^2$), the value being obtained by dividing the mass of silicon atoms (ppm by mass) at the surface of the silica-coated boron nitride particle by a BET specific surface area ($m^2/g$) of a boron nitride particle before coated with silica.

[3] The method of manufacturing a silica-coated boron nitride particle according to [1] or [2], wherein the first step is performed by a dry mixing method or a gas phase adsorption method.

[4] The method of manufacturing a silica-coated boron nitride particle according to any one of [1] to [3], wherein the first step is performed under an atmosphere including no oxygen gas.

[5] The method of manufacturing a silica-coated boron nitride particle according to any one of [1] to [4], wherein the organic silicone compound including a structure represented by the formula (1) includes at least one of a compound represented by the following formula (2) and a compound represented by the following formula (3):

[Chem. 2]

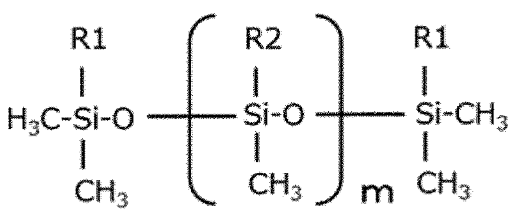

· · · (2)

wherein in the formula (2), R1 and R2 are each independently a hydrogen atom or a methyl group, and at least one of R1 and R2 is a hydrogen atom, and m is an integer of 0 to 10;

[Chem. 3]

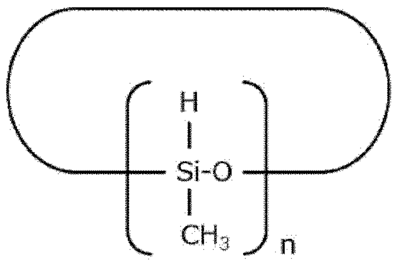

· · · (3)

wherein in the formula (3), n is an integer of 3 to 6.

[6] The method of manufacturing a silica-coated boron nitride particle according to any one of [1] to [5], wherein the first step is performed under a temperature condition of 10°C or more and 200°C or less.

[7] A method of manufacturing a heat dissipating resin composition, the method including a step of manufacturing silica-coated boron nitride particles by the method of manufacturing a silica-coated boron nitride particle according to any one of [1] to [6], and a mixing step of mixing the silica-coated boron nitride particles with a resin.

[8] A silica-coated boron nitride particle including a boron nitride particle and a silica coating covering the surface of the boron nitride particle, wherein the content of carbon atoms is 1000 ppm by mass or less.

[9] The silica-coated boron nitride particle according to [8], wherein a value of the mass (μg) of silicon atoms per $m^2$ of the surface area of the boron nitride particle is 50 or more and 500 or less ($\mu g/m^2$), the value being obtained by dividing the mass of silicon atoms (ppm by mass) at the surface of the silica-coated boron nitride particle by a BET specific surface area ($m^2/g$) of a boron nitride particle before coated with silica.

Effects of the Invention

The present invention can provide a method of manufacturing a silica-coated boron nitride particle, the method being capable of manufacturing a silica-coated boron nitride particle having improved moisture resistance, adhesiveness in which high thermal conductivity is maintained; a method of manufacturing a heat dissipating resin composition containing the silica-coated boron nitride particle; and the silica-coated boron nitride particle.

BRIEF DESCRIPTION OF THE DRAWINGS

Fig. 1 shows a flow chart of a method of manufacturing a silica-coated boron nitride particle according to an embodiment of the present invention.

PREFERRED MODE FOR CARRYING OUT THE INVENTION

Below, the present invention will be described in detail.

<<Method of manufacturing silica-coated boron nitride particle>>

In the method of manufacturing a silica-coated boron nitride particle according to an embodiment of the present invention, manufactured is a silica-coated boron nitride particle including a boron nitride particle and a silica coating covering the surface of that boron nitride particle. The method of manufacturing a silica-coated boron nitride particle according to an embodiment of the present invention is characterized by including a first step of covering the surface of a boron nitride particle with an organic silicone compound including a structure represented by the following formula (1):

[Chem. 4]

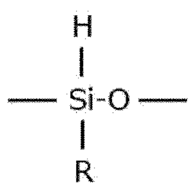

· · · (1)

wherein in the formula (1), R is an alkyl group having a carbon number of 4 or less; and a second step of heating the boron nitride particle covered with the organic silicone compound at a temperature of 500°C or more and 1000°C or less, in which the content of carbon atoms in the silica-coated boron nitride particle is 1000 ppm by mass or less.

The method of manufacturing a silica-coated boron nitride particle according to an embodiment of the present invention as described above will be explained in detail with reference to Fig. 1. Fig. 1 shows a flow chart of a method of manufacturing a silica-coated boron nitride particle according to an embodiment of the present invention.

[Boron nitride particle]

A known material such as a commercially available product may be used for a boron nitride particle which will be used as a raw material in the method of manufacturing a silica-coated boron nitride particle according to an embodiment of the present invention. There is no particular limitation for a method of manufacturing a boron nitride particle, but the followings are known: a method in which melted boric anhydride is reacted with nitrogen or ammonia using a calcium phosphate catalyst; a method in which boric acid or alkali boride is reacted with an organic nitrogen compound such as urea, guanidine, and melamine under a nitrogen-ammonia atmosphere at high temperature; a method in which melted sodium borate is reacted with ammonium chloride under an ammonia atmosphere; a method in which boron trichloride is reacted with ammonia at high temperature. Any of these may be used to obtain a boron nitride particle. Further, boron nitride (BN) is known to have various crystal structures, including hexagonal boron nitride, cubic boron nitride, and rhombohedral boron nitride. Any of these may be used in the present invention. Among these boron nitrides, hexagonal boron nitride is particularly preferred because it is excellent in thermal conductivity and voltage resistance, and also because it is inexpensive and easily available in an industrial scale.

Further, aggregates of boron nitride particulates (primary particles) or particles obtained after granulating aggregates by sintering may also be used as boron nitride particles. In particular, sintered granules obtained from highly pure boron nitride particulates having a d50 in cumulative volume of about 0.1 to 20 μm as a row material can suitably be used as boron nitride particles. Common approaches of granulation include, but not limited to, spray drying. Crushed and classified articles of sintered formed-products, for example, are also used industrially.

The term "highly pure boron nitride particulate" as used herein refers to a particle having both a low oxygen content and less metal impurities. Specifically, for example, a highly pure boron nitride having an oxygen content of 1% by mass or less and a total content of metal impurities of 1000 ppm by mass or less is suitable for obtaining higher thermal conductivity of a boron nitride particle included in a silica-coated boron nitride particle.

Boron nitride particles may be used alone or in combination.

It is noted that the aforementioned oxygen content can be measured with an inorganic analyzer equipped with an infrared detector for detecting oxygen and the like. Specifically, the oxygen content can be measured with an analyzer for oxygen, nitrogen, and hydrogen (ONH836: available from LECO Japan Corporation).

Further, the total content of metal atoms contained in boron nitride particles can be measured with an ICP (Inductively Coupled Plasma) mass spectrometer and the like. Specifically, the total content of metal atoms can be measured with an ICP mass spectrometer (ICPMS-2030: available from Shimadzu Corporation).

It is noted that the d50 in cumulative volume of particles as used herein represents a particle diameter at which an integrated value of the cumulative volume is 50% for a certain particle size distribution. The d50 in cumulative volume may be obtained from a particle size distribution as determined by a laser diffraction scattering method. Specifically, the d50 in cumulative volume can be measured with a particle size distribution measuring device of a laser diffraction scattering type (Microtrac MT3300EX2: available from Microtrac BEL Corp.).

There is no particular limitation for the shape of a boron nitride particle used in the present invention, but examples of the shape of a primary particle of boron nitride include scale-like, flat, granular, spherical, random (crushed), globular, elliptic, fiber-like, and whisker-like shapes. Among these, a scale-like shape is preferred. Further, in a case where silica-coated boron nitride particles as a filler for a heat dissipation material are dispersed and contained in a heat dissipating resin composition, the same type of boron nitride particles having the same shape and structure (single species) may be used alone. However, mixtures of boron nitride particles where two or more types of different boron nitride particles having different shapes and structures are mixed at various ratios may also be used.

In a case where silica-coated boron nitride particles are dispersed and contained in a heat dissipating resin composition, a higher volume ratio (filling amount) of boron nitride particles of the silica-coated boron nitride particles to the heat dissipating resin composition will increase the thermal conductivity of the heat dissipating resin composition. Therefore, the shape of a boron nitride particle is preferably close to a globular shape, such that addition of silica-coated boron nitride particles less increases the viscosity of a heat dissipating resin composition.

The mean aspect ratio (a measure of particle shapes) of boron nitride particles is preferably in a range between 0.8 or more and 1.0 or less, more preferably in a range between 0.85 or more and 1.0 or less, and even more preferably in a range between 0.9 or more and 1.0 or less. Here, the mean aspect ratio of boron nitride particles corresponds to the arithmetic mean value of a ratio (D1/D2) in which a short diameter (D1) and a long diameter (D2) are measured for

each of randomly selected 100 particles in an electron micrograph. It is noted that the short diameter (D1) is the shortest length between two parallel lines in an electron micrograph of boron nitride particles, and the long diameter (D2) is the longest length between two parallel lines in the electron micrograph.

The d50 in cumulative volume of boron nitride particles used for the present invention is preferably 0.1 μm or more and 200 μm or less, more preferably 0.2 μm or more and 100 μm or less, and even more preferably in a range between 0.5 μm or more and 50 μm or less.

A d50 in cumulative volume of boron nitride particles falling within the aforementioned ranges can provide a thin heat dissipation material having a minimum thickness even when a heat dissipating resin composition containing silica-coated boron nitride particles is used as a heat dissipation material on which a power-related electronic part will be mounted. In addition, the moisture resistance of boron nitride particles can be further improved probably because the surface of a boron nitride particle may tend to be uniformly coated.

It is noted that use of relatively fine boron nitride particles having a d50 in cumulative volume of 50 μm or less in the method of manufacturing a silica-coated boron nitride particle according to an embodiment of the present invention also does not significantly affect thermal conductivity probably because a thin coating layer of a silica can be formed.

Further, examples of boron nitride particles may include, but not particularly limited to, those suitable for surface treatment with, for example, a silane coupling agent and the like before or after forming a silica coating with an organic silicone compound as described below. No particular synergistic effect can be observed between a silica coating according to an embodiment of the present invention and improved thermal conductivity or improved adhesiveness even if treatment is performed with a silane coupling agent. However, they can be used in combination in view of dispersibility over resins when silica-coated boron nitride particles are added to various resins to prepare heat dissipating resin compositions, or in view of aggregability when aggregates of boron nitride particles (primary particles) are formed.

As the silane coupling agent described above, those may be used having an alkyl group, an aryl group, an amino group, an epoxy group, an isocyanato group, an alkoxy group, a mercapto group. Further, there is no particular limitation for the silane coupling agent described above, but, for example, silane coupling agents having a cross-linked structure may also be used such as 1,6-bis(trimethoxysilyl)hexane, tris-(trimethoxysilylpropyl)isocyanurate, bis(triethoxysilylpropyl)tetrasulfide, and hexamethyldisilazane.

Moreover, the silane coupling agents having the aforementioned cross-linked structures can also be obtained by allowing reactions between organic functional groups for cross-linking. Combinations of organic functional groups in this case include, but not limited to, for example, combinations of organic functional groups of coupling agents, such as amino group-epoxy group, epoxy group-isocyanato group, amino group-isocyanato group, amino group-sulfo group, amino group-halogen, and mercapto group-isocyanato group.

The aforementioned various coupling agents may be used alone as a single species, or in combination of two or more.

[Organic silicone compound used for coating]

There is no particular limitation for an organic silicone compound used as a raw material of a silica coating of a silica-coated boron nitride particle in the method of manufacturing a silica-coated boron nitride particle according to an embodiment of the present invention, as long as the organic silicone compound includes a structure represented by the above formula (1) regardless of whether it is linear, circular, or branched. The structure represented by the formula (1) is a hydrogensiloxane unit in which hydrogen is directly bound to a silicon atom.

In the above formula (1), R, which is an alkyl group having a carbon number of 4 or less, is preferably a methyl group, an ethyl group, a propyl group, or a t-butyl group, and is in particular preferably a methyl group. An organic silicone compound used as a raw material in the method of manufacturing a silica-coated boron nitride particle according to an embodiment of the present invention is, for example, an oligomer or polymer including a structure represented by the formula (1).

As an organic silicone compound, suitable are, for example, a compound represented by the following formula (2) and a compound represented by the following formula (3):

[Chem. 5]

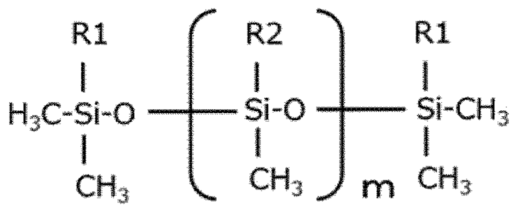

· · · (2)

wherein in the formula (2), R1 and R2 are each independently a hydrogen atom or a methyl group, and at least one of R1 and R2 is a hydrogen atom, and m is an integer of 0 to 10;

[Chem. 6]

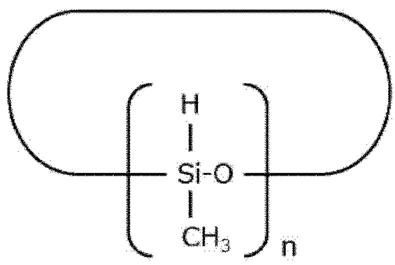

· · · (3)

wherein in the formula (3), n is an integer of 3 to 6.

In particular, a cyclic hydrogensiloxane oligomer having n of 4 in the above formula (3) is adventurous in terms of its capability of forming a uniform coating on the surface of a boron nitride particle. The mass average molecular weight of an organic silicone compound including a structure represented by the formula (1) is preferably 100 or more and 2000 or less, more preferably 150 or more and 1000 or less, and even more preferably in a range between 180 or more and 500 or less. Use of an organic silicone compound including a structure represented by the formula (1) and having a mass average molecular weight of this range can presumably promote formation of a thin and uniform coating on the surface of a boron nitride particle. It is noted that in the formula (2), m is desirably 0 to 6, more desirably 0 to 3, and most desirably 1.

A mass average molecular weight as used herein is in terms of polystyrene as determined by gel permeation chromatography (GPC). Specifically, it may be measured by means of a combination of a column (Shodex® LF-804: available from Showa Denko K.K.) and a differential refractive index detector (Shodex® RI-71S: available from Showa Denko K.K.).

<First step>

The surface of a boron nitride particle as described above is covered with an organic silicone compound including a structure represented by the above formula (1) in a first step. There is no particular limitation for a method which may be used in the first step as long as the surface of a boron nitride particle as described above can be covered with an organic silicone compound including a structure represented by the above formula (1). Methods which may be used in the first step include a dry mixing method and the like in which an organic silicone compound is added by means of spraying and the like while boron nitride particles as a raw material are stirred in a common powder mixing machine, thereby achieving dry mixing. Powder mixing machines include, for example, a ribbon blender with mixing blades such as a Henschel mixer®, a container-rotating V-type blender, a double-cone blender; a screw blender; a sealed rotary kiln; stirring with a stirrer in a sealed vessel using magnet coupling; and the like. There is no particular limitation for a temperature condition in this case, which also depends on the boiling point and the vapor pressure of a silicone compound including a structure represented by the formula (1), but a preferred temperature is 10°C or more and 200°C or less, more preferably 20°C or more and 150°C or less, and even more preferably in a range between 40°C or more and 100°C or less.

As a method which may be used in the first step, a gas phase adsorption method may also be used in which a vapor of an organic silicone compound including a structure represented by the formula (1) alone or a gas mixture thereof with an inert gas such as nitrogen gas is attached or deposited on the surface of a boron nitride particle in a static state. There is no particular limitation for a temperature condition in this case, which also depends on the boiling point and the vapor pressure of a silicone compound including a structure represented by the formula (1), but a preferred temperature is 10°C or more and 200°C or less, more preferably 20°C or more and 150°C or less, and even more

preferably in a range between 40°C or more and 90°C or less. A temperature condition of 10°C or more and 200°C or less can allow an organic silicone compound including a structure represented by the formula (1) to efficiently adhere on the surface of a boron nitride particle. Further, the inside of a system may be pressurized or depressurized, if required. As a machine which may be used in this case, preferred is a machine of a sealed system in which a gas in the system can easily be replaced. For example, a glass vessel, a desiccator, a CVD machine, and the like may be used. The treatment time for coating a boron nitride particle with an organic silicone compound without stirring needs to be longer. Nonetheless, a portion inaccessible due to particles which are brought into contact to each other and particles distant from the upper air layer can be well treated by intermittently placing a treatment vessel on a vibrator for dislocation.

Further, gas-phase processing may also be performed by placing a vaporized organic silicone compound under an atmosphere in a machine such as a ribbon blender with mixing blades such as a Henschel mixer®, a container-rotating V-type blender, a double-cone blender; a screw blender; a sealed rotary kiln; a sealed vessel using magnet coupling; and a multistage band dryer in which a belt-conveyer is adopted, as exemplified as powder mixing machines in the section where the dry mixing methods are described.

There is no particular limitation for the amount of an organic silicone compound including a structure represented by the formula (1) used in the first step. However, an organic silicone compound is expensive, and thus there exists a reference value of a rational upper limit. Eventually, a value of the mass (μg) of silicon atoms per $m^2$ of the surface area of a boron nitride particle is preferably 50 or more and 500 or less ($\mu g/m^2$), more preferably 60 or more and 400 or less ($\mu g/m^2$), even more preferably 70 or more and 300 ($\mu g/m^2$) or less, the value being obtained by dividing the mass of silicon atoms (ppm by mass) from an organic silicone compound including a structure represented by the formula (1) at the surface of the silica-coated boron nitride particle by a BET specific surface area ($m^2/g$) of a boron nitride particle before coated with silica. If the value falls within the aforementioned ranges, a silica-coated boron nitride particle particularly excellent in both thermal conductivity and moisture resistance can be obtained.

It is noted that the specific surface area as determined by a BET method can be measured using the single point BET nitrogen adsorption method by a gas flow method. A Macsorb HM model-1210 available from Mountech Co., Ltd. may be used as an evaluation apparatus.

<Second step>

In a second step, boron nitride particles covered with an organic silicone compound obtained in the first step are heated at a temperature of 500°C or more and 1000°C or less. This enables a silica coating to be formed on the surface of a boron nitride particle. A common heating furnace may be used in the second step if boron nitride particles covered with an organic silicone compound obtained in the first step can be heated at a temperature of 500°C or more and 1000°C or less, that is, if boron nitride particles covered with an organic silicone compound obtained in the first step can be maintained at a temperature of 500°C or more and 1000°C or less.

In the heat treatment of the second step, an organic silicone compound including a structure represented by the formula (1) which covers the surface of a boron nitride particle is thought to be bound to each other, or bound to a hydroxy group and the like on the surface of the boron nitride particle through a dehydrogenation reaction in the initial stage of the heat treatment, thereby further strengthen the coating. Then, an organic group (an alkyl group having a carbon number of 4 or less) of the organic silicone compound is decomposed and vaporized off in the final stage of the heat treatment. Consequently, the content of carbon atoms in the resulting silica coating is decreased, which, in turn, also decreases the content of carbon atoms in the resulting silica-coated boron nitride particle. In this way, a silica-coated boron nitride particle having a content of carbon atoms of 1000 ppm by mass or less can be obtained. When the content of carbon atoms in a silica-coated boron nitride particle is 1000 ppm by mass or less, good moisture resistance can be obtained, and insulating properties and the like are less affected by unevenly distributed carbon atoms. The content of carbon atoms in a silica-coated boron nitride particle is preferably 700 ppm by mass or less, more preferably 500 ppm by mass or less.

It is noted that a silica coating means a coating formed with a thin film having silica ($SiO_2$) as the main component. However, segments of $BSiO_4$ ions, SiNO ions, and the like may be detected at the same time as accessory components when analyzed with ToF-SIMS (Time of Flight Secondary Ion Mass Spectrometry, TOF.SIMS5, available from ION-TOF GmbH). This is because multiple inorganic composites may be present at the interface between coated silica and a boron nitride particle, and in addition, secondly ions may be bound to each other, and decomposition may occur upon ionization. These composite segments evident from ToF-SIMS analysis can also be defined as a part of detected substances when boron nitride is silicated. As a rule of thumb, silica may be considered to be the main component when the amount of secondly electrons from silica is larger than that from other fragments.

In an experiment where the purity of silica can be determined more precisely, the surface of a sample in which a silica coating is formed on a polycrystalline boron nitride substrate by a similar method is measured with a photoelectron spectrometer (XPS: X-ray Photoelectron Spectroscopy, Quantera II, available from ULVAC-PHI, INCORPORATED.). The kinetic energy of detected photoelectron from Si is substantially in agreement with the standard peak of silica at

103.7 eV, suggesting that the sample is mostly composed of the $SiO_2$ structure. It is noted that an organic component may possibly remain depending on a heating temperature. An organic siloxane component may well be coresident as long as the effects of the present invention are not impaired.

The content of carbon atoms may be measured with a carbon and sulfur analyzer and the like in which a non-dispersive infrared absorption spectrophotometry is used in a tubular electric furnace system. Specifically, a carbon and sulfur analyzer (Carbon Analyzer EMIA-821: available from Horiba Ltd.) can be used for measurement.

The heating temperature (heat-treatment temperature) in the second step is 500°C or more and 1000°C or less. When this temperature range is used, a silica coating having good moisture resistance and thermal conductivity can be formed. Specifically, heating at 500°C or more can provide good moisture resistance probably because the resulting silica coating may be densified and thus become less water permeative. Further, heating at 1000°C or less can provide good thermal conductivity. Further, a heating temperature of 500°C or more and 1000°C or less can form a uniform silica coating on the surface of a boron nitride particle. Moreover, a heating temperature of 500°C or more can confer excellent insulating properties on a silica coating, and a temperature of 1000°C or less is also effective in terms of energy cost. The heating temperature is more preferably 550°C or more, even more preferably 600°C or more. Further, under an oxidative atmosphere such as air, the upper limit is preferably 950°C or less, more preferably 900°C or less. Under an inert atmosphere or a reductive gas atmosphere, a temperature of 1000°C or less would not cause any troubles.

Heating time is preferably 30 minutes or more and 20 hours or less, more preferably 45 minutes or more and 10 hours or less, and even more preferably in a range between 1 hour or more and 8 hours or less. Heat treatment time of 30 minutes or more is preferred because there left no residual decomposition products of an organic group (an alkyl group having a carbon number of 4 or less) of an organic silicone compound, and a silica coating having a very small content of carbon atoms can be obtained on the surface of a boron nitride particle. Moreover, heating time of 20 hours or less is preferred because a silica-coated boron nitride particle can be manufactured with high productive efficiency.

Heat treatment in the second step may be performed under an atmosphere containing oxygen gas, for example, under the atmosphere (under the air), under an inert atmosphere such as nitrogen, or under a reductive gas atmosphere such as nitrogen containing 2% hydrogen.

After heat treatment in the second step, silica-coated boron nitride particles may be partially fused to each other. If this occurs, it can be broken down and crushed to obtain silica-coated boron nitride particles which are free from adhesion and aggregation. It is noted that there is no particular limitation for a machine for use in breaking down and crushing, but a common pulverizer may be used such as a roller mill, a hammer mill, a jet mill, and a ball mill.

After the completion of the second step, the first step and the second step may be further performed in this order. That is, a step of performing the first step and the second step in this order may be repeated.

In a case where the surface of a boron nitride particle is covered with an organic silicone compound by a gas phase adsorption method in the first step, a coating process by the gas phase adsorption method can form a uniform and thin silica coating as compared with a coating process performed by liquid treatment. Therefore, a good thermal conductivity inherent to a boron nitride particle can be demonstrated even when the step of performing the first step and the second step in this order is repeated for multiple times, for example, about 2 to 5 times.

Meanwhile, with regard to moisture resistance, a positive correlation is observed between the number of times of the step of performing the first step and the second step in this order and moisture resistance. Accordingly, the number of times of the step of performing the first step and the second step in this order can be selected appropriately depending on the level of moisture resistance required for actual applications.

The silica-coated boron nitride particle obtained by the method of manufacturing a silica-coated boron nitride particle according to an embodiment of the present invention as described above can maintain a high thermal conductivity inherent to a boron nitride particle, and also have excellent moisture resistance. Therefore, it can be widely used as a filler for heat dissipation materials which may be used in the electric/electronic fields and the like.

<<Silica-coated boron nitride particle>>

By the method of manufacturing a silica-coated boron nitride particle according to an embodiment of the present invention as described above, the silica-coated boron nitride particle according to an embodiment of the present invention can be obtained, i.e., a silica-coated boron nitride particle having a boron nitride particle and a silica coating covering the surface of the boron nitride particle in which the content of carbon atoms is 1000 ppm by mass or less.

As shown in Example described below, such a silica-coated boron nitride particle according to an embodiment of the present invention can maintain a high thermal conductivity inherent to a boron nitride particle, and have excellent moisture resistance. For example, the silica-coated boron nitride particle according to an embodiment of the present invention can show exceptionally superior moisture resistance as evident from an observation where the concentration of ammonia eluted into aqueous hydrochloric acid can be 20 mg/L or less when added to aqueous hydrochloric acid adjusted to pH 4, and treated at 85°C for 2 hours (that is, silica-coated boron nitride particles are immersed in aqueous hydrochloric acid adjusted to pH 4 at 85°C for 2 hours). It is noted that a test in which particles are exposed to aqueous

hydrochloric acid adjusted to pH 4 can be performed as an accelerated test for moisture resistance. This is because a hydrolysis reaction is more promoted in an acidic solution than in the air. Therefore, use of aqueous hydrochloric acid at pH 4 enables silica-coated boron nitride particles to be evaluated for moisture resistance. In this case, the ammonia concentration of 20 mg/L or less can be considered to be indicative of good moisture resistance. Further, chemical resistance can also be compared at the same time when aqueous hydrochloric acid at pH 4 is used.

The concentration of eluted ammonia is preferably 10 mg/L or less, more preferably 6 mg/L or less.

In view of moisture resistance, the content of carbon atoms is preferably as low as possible. Here, in the method of manufacturing a silica-coated boron nitride particle according to an embodiment of the present invention as described above, an organic silicone compound having a structure represented by the formula (1) is used as a raw material. Consequently, the resulting silica-coated boron nitride particle often contains carbon atoms, and may include, for example, 50 ppm by mass or more of carbon atoms, or even 60 ppm by mass or more of carbon atoms. However, 1000 ppm by mass or less is indicative of excellent moisture resistance as described above.

The content of silicon atoms may be quantified using an inductively-coupled plasma (ICP) emission spectrophotometer. Specifically, a sample was heated and melted in a platinum crucible along with sodium carbonate and boric acid, and then dissolved for measurement in sulfuric acid with concentrated sulfuric acid/distilled water = 1/1 (mass ratio).

Moreover, the mass of silicon atoms per $m^2$ of the surface area ($\mu g/m^2$) of a boron nitride particle is obtained by dividing a value of the content of silicon atoms (ppm by mass) from a coating layer by a BET specific surface area ($m^2/g$) of a raw material boron nitride particle, the value of the content of silicon atoms (ppm by mass) from a coating layer being obtained by subtracting only the content of silicon atoms in the raw material boron nitride particle from the total content of silicon atoms in the silica-coated boron nitride particle. That value is preferably 50 or more and 500 or less ($\mu g/m^2$), more preferably 60 or more and 400 or less ($\mu g/m^2$), and even more preferably 70 or more and 300 or less ($\mu g/m^2$). A value of 50 or more ($\mu g/m^2$) can provide sufficient moisture resistance, and a value of 500 or less ($\mu g/m^2$) can provide sufficient thermal conductivity.

<<Method of manufacturing heat dissipating resin composition >>

The silica-coated boron nitride particle according to an embodiment of the present invention as described above can be used to manufacture a heat dissipating resin composition. That is, the method of manufacturing a heat dissipating resin composition according to an embodiment of the present invention includes a mixing step of mixing silica-coated boron nitride particles manufactured by the aforementioned method of manufacturing a silica-coated boron nitride particle with a resin.

Silica-coated boron nitride particles manufactured by the aforementioned method of manufacturing a silica-coated boron nitride particle can maintain a high thermal conductivity inherent to a boron nitride particle, and have improved moisture resistance. Therefore, a heat dissipating resin composition obtained by the method of manufacturing a heat dissipating resin composition according to an embodiment of the present invention will be excellent in moisture resistance and thermal conductivity.

Silica-coated boron nitride particles manufactured by the aforementioned method of manufacturing a silica-coated boron nitride particle are mixed with a resin in the mixing step.

There is no particular limitation for a resin to be mixed in the mixing step, but it is preferably a thermosetting resin, a thermoplastic resin, or a mixture of a thermosetting resin and a thermoplastic resin in view of excellent thermal resistance of the resulting heat dissipating resin composition. Thermosetting resins include, for example, silicone resins, epoxy resins, phenol resins, bismaleimide resins, cyanate resins, urethane resins, (meth)acrylic resins, vinylester resins, unsaturated polyester resins, polyvinyl alcohol acetal resins, and the like. They may be used alone or mixed in combination of two or more. Further, a mixture may be used in which a curing agent or a curing accelerator is added to a thermosetting resin. In particular, an epoxy resin is preferred in view of good thermal resistance, adhesiveness, and electrical properties after curing, and a silicone resin is preferred for applications in which flexible adhesiveness is important.

It is noted that silicone resins include addition reaction-curable silicone resins, condensation reaction-curable silicone resins, organic peroxide-curable silicone resins, and the like. They may be used alone or in combination of two or more having different viscosities. In particular, when the resulting heat dissipating resin composition is used for applications in which flexible adhesiveness is important, silicone resins include, for example, addition reaction-curable liquid silicone resins in which no by-products possibly acting as causative substances for air bubbles and the like are produced. A cured silicone resin can be obtained by reacting organopolysiloxane having an alkenyl group, which serves as a base polymer, with organopolysiloxane having an Si-H group, which serves as a cross-linking agent, at ordinary temperature or an elevated temperature in the presence of a curing agent. It is noted that specific examples of organopolysiloxane serving as a base polymer include, for example, those having a vinyl group, an allyl group, a propenyl group, a hexenyl group, and the like as an alkenyl group. In particular, a vinyl group is preferred for organopolysiloxane. Further, a curing catalyst, for example, a platinum metal-based curing catalyst may be used. The addition amount thereof may also be adjusted to achieve a desired hardness of a cured resin.

Epoxy resins include bifunctional glycidyl ether epoxy resins such as a bisphenol A epoxy resin, a bisphenol F epoxy resin, a bisphenol S epoxy resin, a hydrogenerated bisphenol A epoxy resin, and a biphenyl epoxy resin; glycidyl ester epoxy resins such as hexahydrophthalic acid glycidyl ester and dimer acid glycidyl ester; linear aliphatic epoxy resins such as epoxidized polybutadiene and epoxidized soybean oil; heterocyclic epoxy resins such as triglycidyl isocyanurate; glycidyl amine epoxy resins such as N,N,N',N'-tetraglycidyl-4,4'-diaminodiphenylmethane, N,N,N',N'-tetraglycidyl-1,3-benzenedi(methanamine), 4-(glycidyloxy)-N,N-diglycidyl aniline, 3-(glycidyloxy)-N,N-diglycidyl aniline; polyfunctional glycidyl ether epoxy resins such as a phenol novolak epoxy resin, a cresol novolak epoxy resin, a biphenylaralkyl epoxy resin, a naphthalenearalkyl epoxy resin, a tetrafunctional naphthalene epoxy resin, and a triphenylmethane epoxy resin; and the like. The aforementioned epoxy resins may be used alone, or may be mixed and used in combination of two or more.

When the aforementioned epoxy resins are used, a curing agent or a curing accelerator may be blended. Curing agents include, for example, alicyclic acid anhydrides such as methyltetrahydrophthalic anhydride, methylhexahydrophthalic anhydride, and himic acid anhydride; aliphatic acid anhydrides such as dodecenyl succinic anhydride; aromatic acid anhydrides such as phthalic anhydride and trimellitic anhydride; bisphenols such as bisphenol A, bisphenol F, and bisphenol S; phenol resins such as a phenol formaldehyde resin, a phenol aralkyl resin, a naphthol aralkyl resin, and a phenol-dicyclopentadiene copolymer resin; organic dihydrazides such as dicyandiamide and adipic acid dihydrazide. Curing catalysts include, for example, amines such as tris(dimethylaminomethyl)phenol, dimethylbenzylamine, 1,8-diazabicyclo(5,4,0)undecene, and derivatives thereof; imidazoles such as 2-methylimidazole, 2-ethyl-4-methylimidazole, and 2-phenylimidazole, and derivatives thereof. These may be used alone, or may be mixed and used in combination of two or more.

In the mixing step, a commonly used filler such as alumina, silica, aluminum nitride, and zinc oxide other than the aforementioned silica-coated boron nitride particles may be used in combination.

The aforementioned silica-coated boron nitride particles and a filler other than the aforementioned silica-coated boron nitride particles may be mixed in the mixing step in those amounts sufficient for providing a desired heat dissipating resin composition. The total content of the aforementioned silica-coated boron nitride particles and a filler other than the aforementioned silica-coated boron nitride particles in the resulting heat dissipating resin composition is preferably 50 vol% or more and 95 vol% or less, more preferably 60 vol% or more and 90 vol% or less, and even more preferably in a range between 70 vol% or more and 90 vol% or less. A total content of 50 vol% or more can provide good heat dissipating properties, and a total content of 95 vol% or less can provide good workability upon when a heat dissipating resin composition is used.

Further, the content of silica-coated boron nitride particles in the resulting heat dissipating resin composition is preferably 30 vol% or more and 100 vol% or less of the total content of the aforementioned silica-coated boron nitride particles and a filler other than the aforementioned silica-coated boron nitride particles, more preferably 40 vol% or more and 100 vol% or less, and even more preferably in a range between 50 vol% or more and 100 vol% or less. A total content of 30 vol% or more can show good heat dissipating properties.

In the mixing step, a flexibility-conferring agent such as silicone, urethane acrylate, a butyral resin, an acrylic rubber, diene-based rubber, and copolymers thereof; a silane-based coupling agent; a titanium-based coupling agent; an inorganic ion scavenger; a pigment; a dye; a diluent; a solvent; and the like may be further added in an appropriate way, if required.

There is no particular limitation for a mixing method in the mixing step, but, for example, a method may be used in which silica-coated boron nitride particles, a resin, and other additives, and the like are all at once or in portions mixed, dissolved, and kneaded, if required, with heating, using a dispersing/dissolving machine such as a stone mill, a planetary mixer, a planetary centrifugal mixer, a kneader, and a roll mill alone or in combination.

The resulting heat dissipating resin composition may be formed into a sheet-like shape and, if required, reacted to provide a heat dissipation sheet. The heat dissipating resin composition and the heat dissipation sheet as described above may be suitably used for adhesive applications for semiconductor power devices, power modules, and the like.

Methods of manufacturing a heat dissipation sheet include a method in which a heat dissipating resin composition sandwiched between base films is subjected to compression-press forming; a method in which a heat dissipating resin composition is applied on a base film by using a device such as a bar coater, screen printing, a blade coater, a die coater, and a comma coater; and the like. Further, a heat dissipation sheet after forming/application may be subjected to an additional treatment step such as a step of removing a solvent, a step of achieving the B-stage by heating and the like, a step of performing complete curing. As described above, heat dissipation sheets of various forms can be obtained depending on steps used. This enables them to be widely used in target application fields and usages.

When applying or forming a heat dissipating resin composition on a base film, a solvent may be used in order to improve workability. There is no particular limitation for a solvent, but the followings may be used alone or may be mixed and used in combination of two or more: ketone-based solvents such as acetone, methyl ethyl ketone, methyl isobutyl ketone, cyclopentanone, and cyclohexanone; ether-based solvents such as 1,4-dioxane, tetrahydrofuran, and diglyme; glycol ether-based solvents such as methyl cellosolve, ethyl cellosolve, propylene glycol monomethyl ether,

propylene glycol monoethyl ether, propylene glycol monobutyl ether, propylene glycol monomethyl ether acetate, propylene glycol monoethyl ether acetate, diethylene glycol methyl ethyl ether; and in addition, benzyl alcohol; N-methylpyrrolidone; γ-butyrolactone; ethyl acetate; N,N dimethylformamide; and the like.

In order to form a heat dissipating resin composition into a sheet-like shape, sheet-forming ability for retaining a sheet-like shape is required. A high molecular weight component may be added to a heat dissipating resin composition in order to obtain sheet-forming ability. For example, mentioned are phenoxy resins, polyimide resins, polyamide resins, polycarbodiimide resins, cyanate ester resins, (meth)acrylic resins, polyester resins, polyethylene resins, polyether sulfone resins, polyetherimide resins, polyvinyl acetal resins, urethane resins, acrylic rubber, and the like. Among these, in view of excellent thermal resistance and film-forming ability, phenoxy resins, polyimide resins, (meth)acrylic resins, acrylic rubber, cyanate ester resins, polycarbodiimide resins are preferred, and phenoxy resins, polyimide resins, (meth)acrylic resins, and acrylic rubber are more preferred. They may be used alone, or may be used as a mixture or a copolymer of two or more.

The molecular weight of a high molecular weight component is preferably a mass average molecular weight of 10000 or more and 100000 or less, more preferably a mass average molecular weight in a range of 20000 or more and 50000 or less.

It is noted that a good sheet-like shape with good handling properties can be retained by adding a component having a mass average molecular weight in the above ranges.

There is no particular limitation for the addition amount of a high molecular weight component, but in order to retain a sheet-like shape, it is preferably 0.1% by mass or more and 20% by mass or less relative to a heat dissipating resin composition, more preferably 1% by mass or more and 15% by mass or less, and even more preferably in a range between 2% by mass or more and 10% by mass or less. It is noted that an addition amount of 0.1% by mass or more and 20% by mass or less enables formation of a good sheet or film with good handling properties.

There is no particular limitation for a base film used for manufacturing a heat dissipation sheet, as long as it can resistant to step conditions such as heating and drying. For example, mentioned are a film including polyester having an aromatic ring such as polyethylene terephthalate (PET), polybutylene terephthalate (PBT); a polypropylene film; a polyimide film; a polyetherimide film, and the like. The aforementioned films may be multilayered films in which two or more types are combined, or those surface-treated with a parting agent such as a silicone-based agent. It is noted that the thickness of a base film is preferably 10 μm or more and 100 μm or less.

The thickness of a heat dissipation sheet formed on a base film is preferably 20 μm or more and 500 μm or less, more preferably 50 μm or more and 200 μm or less. When the thickness of a heat dissipation sheet is 20 μm or more, a heat dissipation sheet with uniform composition can be obtained. When it is 500 μm or less, good heat dissipation properties can be obtained.

EXAMPLES

Below, the present invention will be described specifically with reference to Examples and Comparative Examples. However, the scope of the present invention shall not be limited to these Examples in any sense.

[Measurement of content of carbon atoms in silica-coated boron nitride particles]

The content of carbon atoms in silica-coated boron nitride particles was measured with a carbon and sulfur analyzer in which the non-dispersive infrared absorption spectrophotometry was used in a tubular electric furnace system (Carbon Analyzer EMIA-821: available from Horiba Ltd.).

[Measurement of content of silicon atoms in silica-coated boron nitride particles]

The content of silicon atoms in silica-coated boron nitride particles was measured in accordance with the following procedures.

(1) A 30-cc capacity platinum crucible was placed in a 50-cc capacity Teflon® vessel.
(2) Into the platinum crucible, charged were 10 cc of a solution in which 98 % by mass of sulfuric acid (super special grade, Wako Pure Chemical Co., Ltd.) was mixed with ion exchanged water at a ratio of 2:1 (by volume) and 0.5 g of a sample (silica-coated boron nitride particles).
(3) The Teflon® vessel as a whole was placed in a stainless-steel pressure tight container, and maintained at 230°C for 15 hours to dissolve the charged sample.
(4) The solution mixed in (1) was removed, and the content of silicon atoms (μg) per g of silica-coated boron nitride particles was calculated from the concentration of silicon atoms as measured with an ICP (ICPS-7510, available from Shimadzu Corporation). The value obtained was expressed in ppm by mass. It is noted that the content of

silicon in a raw material boron nitride can be measured in a similar way.

[Measurement of specific surface area of boron nitride particles as determined by BET method]

The specific surface area of boron nitride particles as determined by the BET method was measured with a Macsorb HM model-1210 available from Mountech Co., Ltd. It is noted that a gas mixture of 70 vol% of He and 30 vol% of $N_2$ was used as an adsorption gas.

[Mass of silicon atoms per $m^2$ of surface area of boron nitride particles]

The mass of silicon atoms per $m^2$ of the surface area ($\mu g/m^2$) of a boron nitride particle was calculated by dividing a value of the content of silicon atoms (ppm by mass: $\mu g/g$) from a coating layer by a BET specific surface area ($m^2/g$) of a raw material boron nitride particle as obtained from above, the value of the content of silicon atoms (ppm by mass: $\mu g/g$) from a coating layer being obtained by subtracting the content of silicon atoms in the raw material boron nitride particle from the total content of silicon atoms in the silica-coated boron nitride particle obtained from the above. The calculated masses of silicon atoms per $m^2$ of the surface area of boron nitride particles are shown in the raw "mass of silicon atoms per surface area" in the Tables.

[Evaluation of moisture resistance of silica-coated boron nitride particles]

The moisture resistance of particles such as silica-coated boron nitride particles was determined as follows. To a 50-ml sample tube, charged and sealed were 3 g of silica-coated boron nitride particles and 17 g of aqueous hydrochloric acid adjusted to pH 4. The tube was then shaken in a shaker incubator under conditions of 85°C and 80 rpm for 2 hours, and then allowed to stand, and then cooled to the room temperature (25°C). The concentration of ammonia in the supernatant was measured with a LAQUA available from Horiba Ltd. under a temperature condition of 25°C.

[Measurement of thermal conductivity of resin sheet (heat dissipation sheet)]

(1) Measurement of thermal conductivity of epoxy resin sheet using laser flash method

The thermal diffusivity of a resin sheet was measured at 25°C with a laser-flash thermal diffusivity measurement device (LFA447 NanoFlash: available from NETZSCH GmbH).

A sample for measurement of thermal diffusivity was prepared by cutting a 10 mm × 10 mm sample out of a resin sheet. After measurement of thickness, the specific gravity of the 10-mm squared sample was measured in accordance with the Archimedes method. Specific heat was calculated from the volume fraction of a resin and a filler used. What can be obtained with the above device is thermal diffusivity. Therefore, the following expression was used to obtain thermal conductivity:

$$\text{Thermal conductivity} = \text{thermal diffusivity} \times \text{specific gravity (density)} \times \text{specific heat}$$

A resin sheet subjected to measurements were pre-coated with gold on the both sides with an ion coater (IB-3, available from EIKO Corporation), and then further pre-coated with graphite on the both sides.

(2) Measurement of thermal conductivity of cured silicone resin in accordance with hot disk method

Pellets prepared according the method described below were measured with a hot-disk device for measuring heat dissipation properties TPS 2500 (hereinafter referred to as "hot-disk") available from Kyoto Electronics Manufacturing Co., Ltd. Specific heat capacity was calculated from the volume fraction of a resin and a filler used. The center of a measurement terminal is sandwiched and fixed by a pellet at two points. Measurement was performed at an output power of 0.3 W and a measurement time of 5 seconds with the calculated specific heat capacity inputted to obtain thermal conductivity.

[Measurement of adhesiveness (90° peeling strength) test]

Adhesiveness was evaluated in terms of 90° peeling strength with a digital force gauge/measurement stand ZTS-5N available from IMADA Co., Ltd. A test sample was prepared in accordance with a method of preparing an epoxy resin sheet as described below. Both sides were bonded and cured to the treated side of a 35-μm thick copper foil, and processed into a strip having a width of 1.5 cm. Only one side of it was fixed to a plate of an appropriate thickness with double-sided tape for use in measurement. The both ends of the copper foil on the opposite side of the fixed surface were peeled off so that the central 1-cm portion remained out of the 1.5-cm strip width. The remaining 1-cm width portion of the copper foil was subjected to a 90° peeling strength test at a peeling rate of 200 mm/min using a specified jig to obtain peeling strength (kN/mm). Basically, measurement was performed in accordance with "Peeling strength" in JIS C 6481:1996 "Test methods of copper-clad laminates for printed wiring boards."

[Preparation of particles]

(Boron nitride filler)

The following were used as a boron nitride filler (boron nitride particle).

A: Scale-shaped boron, SHOBN® UHP-2 (available from Showa Denko K.K.) having a volumetric-basis median diameter ($d_{50}$) of 11 μm, and a silicon content of 143 ppm by mass
B: Scale-shaped boron, SHOBN® UHP-1K (available from Showa Denko K.K.) having a volumetric-basis median diameter ($d_{50}$) of 8 μm, and a silicon content of 232 ppm by mass
C: Scale-shaped boron, SHOBN® UHP-S2 (available from Showa Denko K.K.) having a volumetric-basis median diameter ($d_{50}$) of 0.5 μm, and a silicon content of 557 ppm by mass
D: Aggregated boron, SHOBN® UHP-G1H (available from Showa Denko K.K.) having a volumetric-basis median diameter ($d_{50}$) of 15 μm, and a silicon content of 251 ppm by mass

(Surface treatment with silane coupling agent)

As boron nitride particles for use, separately prepared were those subjected to pre-surface treatment with a silane coupling agent and those subjected to post-treatment by addition of a silane coupling agent after silica-coated boron nitride particles were prepared. An epoxy-based silane coupling agent (KBM-403 from Shin-Etsu Chemical Co., Ltd) was used when making a composition with an epoxy resin, and an alkylalkoxysilane (Z-6210 Silane available from Dow Toray Industries, Inc.) was used as a silane coupling agent when making a composition with a silicone resin. In the treatment method, 0.5 parts by mass of a silane coupling agent was added to 100 parts by mass of a filler to be treated, and the mixture was stirred in a planetary centrifugal mixer at 2000 rpm for 30 seconds. This was emptied into a tray and heated at 120°C for 30 minutes to obtain a pre-surface treated filler. In the case of the integral blend method where a silane coupling agent is to be added to a resin in advance, a corresponding silane coupling agent was added to a resin in advance at an amount to give 0.5 parts by mass per 100 parts by mass of a filler when a resin composition was prepared.

(Manufacture of silica-coated boron nitride particles)

(Example 1)

A vacuum desiccator made of a 20-mm thick acrylic resin plate and having inside dimensions of 260 mm × 260 mm × 100 mm and having a two-tiered structure separated by a partition with through-holes was used for surface coating of boron nitride particles in a first step. About 30 g of boron nitride particles-A was uniformly spread on a stainless tray and allowed to stand on the upper stage of the vacuum desiccator. Next, 10 g of an organic silicone compound-A (cyclic methylhydrogensiloxane tetramer: available from Tokyo Chemical Industry Co., Ltd.) in which n = 4 in the formula (3) was placed in a glass petri dish, and allowed to stand on the lower stage of the vacuum desiccator. Then, the vacuum desiccator was closed, and heated in an 80°C oven for 30 hours. It is noted that safety measures were taken as follows during operation: for example, hydrogen gas generated from a reaction was released through an open valve of the vacuum desiccator. After the completion of the first step, the sample was removed from the desiccator, and placed in an alumina crucible. The sample was then heat treated under a condition of 650°C for 1.5 hours in the air in a second step to obtain silica-coated boron nitride particles.

(Example 2)

Boron nitride particles were surface-coated as in Example to obtain silica-coated boron nitride particles except that the heat treatment time in an 80°C oven in Example 1 was changed to 30 minutes.

(Reference Example 1)

Surface treatment with the organic silicone compound-A in Example 1 was performed by a liquid addition method instead of a gas phase method. After 30 g of boron nitride particles-A and 2.5 g of the organic silicone compound-A were added to a 150-ml capacity resin container dedicated for a planetary centrifugal mixer (Awatori Rentaro ARE-310), they were mixed for 1 minute at 2000 rpm with the planetary centrifugal mixer, and then mixed with a medicine spoon, and further mixed for 1 minute at 2000 rpm. The contents were removed and transferred to an alumina crucible, and calcinated under the same condition as in Example 1 to obtain silica-coated boron nitride particles.

(Example 3)

The silica-coated boron nitride particles obtained in Example 1 were surface-treated with a silane coupling agent in accordance with an approach as described above to obtain silica-coated boron nitride particles subjected to post addition of the silane coupling agent.

(Example 4)

Preparation was performed as in Example 1 except that the boron nitride particles-A subjected to pre-treatment with a silane coupling agent in accordance with the approach as described above were used in place of the boron nitride particles-A used as a raw material in Example 1.

(Example 5)

Preparation was performed as in Example 1 except that the boron nitride particles-B were used in place of the boron nitride particles A used as a raw material in Example 1.

(Example 6)

Preparation was performed as in Example 1 except that the boron nitride particles-C were used in place of the boron nitride particles-A used as a raw material in Example 1.

(Example 7)

Preparation was performed as in Example 1 except that the boron nitride particles-D were used in place of the boron nitride particles-A used as a raw material in Example 1.

(Example 8)

Silica-coated boron nitride particles were obtained by performing surface coating of boron nitride particles as in Example 1 except that the heat treatment conditions of 650°C for 1.5 hour in the second step of Example 1 were changed to conditions of 800°C for 3 hours.

(Example 9)

Silica-coated boron nitride particles were obtained by performing surface coating of boron nitride particles as in EXAMPLE 1 except that the heat treatment temperature of 600°C in the second step of EXAMPLE 6 was changed to 800°C.

(Comparative Example 1)

Untreated particles of the boron nitride particles-A used as a raw material in Example 1, but subjected to none of the steps in Example 1 were used as particles in Comparative Example 1.

(Comparative Example 2)

When preparing a sheet for evaluating properties of a composition using the boron nitride particles-A used as a raw material in Example 1 but not subjected to surface treated, an epoxy resin to which a predetermined amount of a silane coupling agent was added was used to obtain the sheet (integral blend method), which was then used for measuring various properties in Comparative Example 2.

(Comparative Example 3)

Particles obtained by subjecting the boron nitride particles-A used as a raw material in Example 1 to silane coupling treatment were used in Comparative Example 3.

(Comparative Example 4)

Untreated particles of the boron nitride particles-B used as a raw material in Example 5, but subjected to none of the steps in Example 5 were used as particles in Comparative Example 4.

(Comparative Example 5)

Untreated particles of the boron nitride particles-C used as a raw material in Example 6, but subjected to none of the steps in Example 6 were used as particles in Comparative Example 5.

(Comparative Example 6)

Untreated particles of the boron nitride particles-D used as a raw material in Example 7, but subjected to none of the steps in Example 6 were used as particles in Comparative Example 6.

(Examples 10 to 11 and Comparative Examples 7 to 8)

For preparing compositions including silicone resins, those similar to the silica-coated boron nitride particles as in Example 1 were provided for Example 10; those similar to the silica-coated boron nitride particles subjected to post addition of a silane coupling agent as in Example 3 were provided for Example 11; those similar to the untreated boron nitride particles as in Comparative Example 1 were provided for Comparative Example 7; and those similar to the non silica-coated boron nitride particles subjected to post addition treatment of a silane coupling agent as in Comparative Example 2 were provided for Comparative Example 8.

[Preparation of compositions including epoxy resin and manufacture of epoxy resin sheets using these compositions]

A solution mixture having 30 % by mass of a resin mixture dissolved in 1-methoxy-2-propanol (solvent); and 2-ethyl-4-methylimidazole (2E4MZ: available from Shikoku Chemicals Corp.) as a curing agent were blended with each of the silica-coated boron nitride particles from Examples 1 to 9 and the boron nitride particles from Comparative Examples 1 to 6 to give parts by mass as shown in Tables 1 and 2. The above resin mixture included a bisphenol A epoxy resin (YD128: NIPPON STEEL Chemical & Material Co., Ltd.) as a resin component having an epoxy equivalent of 189 and a bisphenol A phenoxy resin (YP-50S: NIPPON STEEL Chemical & Material Co., Ltd.) as a high molecular weight component having a mass average molecular weight of 40000 in terms of polystyrene such that the mass ratio of the bisphenol A epoxy resin and the bisphenol A phenoxy resin was 90:10. Then, resin sheets were obtained in accordance with the following procedures. It is noted that the curing agent was blended to give 0.3 parts by mass relative to 100 parts by mass of the resin component (epoxy resin). Specifically, the required masses of a filler (the silica-coated boron nitride particles from Examples 1 to 9 and the boron nitride particles from Comparative Examples 1 to 6), a resin component, a high molecular weight component, and a curing agent, depending the desired filling volume were calculated, weighed in this order, and stirred manually. After this, solvent was added dropwise for dilution to a concentration that would enable sheet application, and then the mixture was mixed five times at 2000 rpm for 30 seconds in a planetary centrifugal mixer. Stirring was performed with Awatori Rentaro available from Thinky Corporation. It is noted that stirring was performed while checking the condition of a composition after each stirring. The composition obtained in this way was made into a sheet. A 35-μm copper foil subjected to electrolytic treatment on one side was used as an application substrate. It is noted that a surface subjected to electrolytic treatment was used as an application surface at this time. Application was performed using a coater so that a resin composition layer was formed to have a film thickness of 400 μm, and then dried at 50°C for 20 minutes, and at 50°C for 20 minutes in vacuum. Two of the above sheets were stacked

so that the resin composition layers were in contact with each other, and allowed to pass through a roller while adjusting the sheet pressure so as to obtain a resin sheet having a thickness of 200 μm. Then, heat-press was performed at 120°C for 30 minutes to cure the resin composition layers, thereby preparing an epoxy resin sheet.

[Preparation of compositions including silicone resin and manufacture of pellets using these compositions]

A liquid two-liquid component thermosetting silicone resin (Product name: KE-109E A/B, available from Shin-Etsu Chemical Co., Ltd.) as a resin component was blended with each of the silica-coated boron nitride particles from Examples 10 to 11 and the boron nitride particles from Comparative Examples 7 to 8 to give parts by mass as shown in Table 2. Then, resin pellets were obtained in accordance with the following procedures. Specifically, the required masses of a filler (the silica-coated boron nitride particles from Examples 10 to 11 and the boron nitride particles from Comparative Examples 7 to 8), and a resin component, depending on the desired filling volume were calculated, and weighed in this order. It is noted that a liquid containing no curing catalyst was first stirred with the filler, and a liquid containing a catalyst was then added. This was because the silicone resin was of a two-liquid component curing type. After stirred manually, stirring was performed at 2000 rpm for 30 minutes with a planetary centrifugal mixer. Stirring was performed with Awatori Rentaro available from Thinky Corporation. To prevent immature curing due to frictional heat generated during stirring, stirring was performed while cooling the composition in between. Next, the resulting composition were cured and formed in accordance with the following procedures. A PET substrate and a copper foil having a mold release agent applied thereon were prepared on a steel plate, over which a mold having a mold release agent applied thereon was placed. The mold was filled with a composition, and sandwiched by the copper foil, the PET substrate, and the steel plate, and then pressed at a pressure of 8 tons while keeping this state, and cured at 120°C for 30 minutes to obtain a cured pellet of a silicone composition (silicone resin sheet).

With regard to the boron nitride particles used and the silica-coated boron nitride particles obtained in Examples and Comparative Examples, shown in Table 2 are results from [measurement of specific surface area of boron nitride particles as determined by BET method], [measurement of content of carbon atoms in silica-coated boron nitride particles], and [mass of silicon atoms per $m^2$ of surface area of boron nitride particles] calculated therefrom, [evaluation of moisture resistance of particles], [measurement of adhesiveness (90°C peeling strength) tests], and [measurement of thermal conductivity of resin sheets (heat dissipation sheets)].

These results reveal that the silica-coated boron nitride particles obtained by the method of manufacturing a silica-coated boron nitride particle according to the present invention in Examples 1, 3 to 7, 10, and 11 can maintain high thermal conductivity inherent to boron nitride particles, and can significantly improve moisture resistance and adhesiveness inherent to boron nitride particles as compared with those in Comparative Examples 1 to 8 where no silica-coating treatment was performed, respectively. Further, Examples 8 and 9 where the heat treatment conditions in the second step were higher and/or longer than in Examples 1 and 6 provided thermal conductivity and adhesiveness comparable to Examples 1 and 6, and showed even better results in terms of moisture resistance. Moreover, comparison of Examples 1 to 2 with Reference Example 1 showed that a mass of silicon atoms per surface area falling within a specified range would provide somewhat satisfactory results for all of moisture resistance, peeling strength, and thermal conductivity. However, moisture resistance decreased as the amount of silicon atoms decreased while thermal conductivity tended to decrease as the amount increased. It is noted that particularly in Examples 1, 5, 6, 7, 8, 9, and 10 where no silane coupling treatment was performed, good values were obtained not only for thermal conductivity but also for adhesiveness.

[Table 1]

| Items | | | Comparative Example 1 | Example 1 | Example 2 | Reference Example 1 | Comparative Example 2 | Example 3 | Comparative Example 3 | Example 4 | Comparative Example 4 | Example 5 |
|---|---|---|---|---|---|---|---|---|---|---|---|---|
| Particles | Types of boron nitride particles | Boron nitride particles-A | Yes | Yes | Yes | Yes | Yes | Yes | Yes | Yes | | |
| | | Boron nitride particles-B | | | | | | | | | Yes | Yes |
| | | Boron nitride particles-C | | | | | | | | | | |
| | | Boron nitride particles-D | | | | | | | | | | |
| | Silane coupling agents (Post-addition) | | | | | | Yes | Yes | | | | |
| | Silane coupling | agents (Pre-treatment) | | | | | | | Yes | Yes | | |
| | Types of materials for forming silica coating | Organic silicone compounds-A | | Yes | Yes | Yes | | Yes | | Yes | | Yes |
| | Heating (calcination) conditions in second step | Heat treatment temperature (°C) | | 650 | 650 | 650 | | 650 | | 650 | | 650 |
| | | Heat treatment time (h) | | 1.5 | 1.5 | 1.5 | | 1.5 | | 1.5 | | 1.5 |

(continued)

| Items | | | Comparative Example 1 | Example 1 | Example 2 | Reference Example 1 | Comparative Example 2 | Example 3 | Comparative Example 3 | Example 4 | Comparative Example 4 | Example 5 |
|---|---|---|---|---|---|---|---|---|---|---|---|---|
| Epoxy resin sheets | Properties | Content of silicon atoms (ppm by mass) | 143 | 634 | 495 | 7920 | | 729 | | 697 | | 611 |
| | | Mass of silicon atoms per surface area ($\mu g/m^2$) | | 109 | 78 | 1728 | | 130 | | 123 | | 95 |
| | | Content of carbon atoms (ppm by mass) | | 340 | 340 | 340 | | 340 | | 340 | | 100 |
| | | Moisture resistant ammonia concentration (mg/L) | 20 | 9 | 19 | 9 | 20 | 9 | 21 | 9 | 25 | 10 |
| | Compositions (parts by mass) | Particles | 100.0 | 100.0 | 100.0 | 100.0 | 100.0 | 100.0 | 100.0 | 100.0 | 100.0 | 100.0 |
| | | Epoxy resin | 31.0 | 31.0 | 31.0 | 31.0 | 31.0 | 31.0 | 31.0 | 31.0 | 69.6 | 69.6 |
| | | High molecular weight components | 3.4 | 3.4 | 3.4 | 3.4 | 3.4 | 3.4 | 3.4 | 3.4 | 7.7 | 7.7 |
| | Content of particles (vol%) | | 60.0 | 60.0 | 60.0 | 60.0 | 60.0 | 60.0 | 60.0 | 60.0 | 40.0 | 40.0 |
| | Peeling strength (kN/mm) | | 1.6 | 2.1 | 1.6 | 1.8 | 1.5 | 1.5 | 1.5 | 1.6 | 3.7 | 3.9 |
| | Thermal conductivity (W/m/K) | | 9.1 | 13.1 | 13.5 | 7.9 | 9.6 | 10.2 | 9.1 | 9.6 | 7.0 | 7.3 |

(continued)

| Items | | | Comparative Example 1 | Example 1 | Example 2 | Reference Example 1 | Comparative Example 2 | Example 3 | Comparative Example 3 | Example 4 | Comparative Example 4 | Example 5 |
|---|---|---|---|---|---|---|---|---|---|---|---|---|
| Silicone resin sheets | Compositions (parts by mass) | Particles | | | | | | | | | | |
| | | Silicone resin | | | | | | | | | | |
| | Content of particles (vol%) | | | | | | | | | | | |
| | Peeling strength (kN/mm) | | | | | | | | | | | |
| | Thermal conductivity (W/m/K) | | | | | | | | | | | |

[Table 2]

| Items | | | Comparative Example 5 | Example 6 | Comparative Example 6 | Example 7 | Example 8 | Example 9 | Comparative Example 7 | Example 10 | Comparative Example 8 | Example 11 |
|---|---|---|---|---|---|---|---|---|---|---|---|---|
| Particles | Types of boron nitride particles | Boron nitride particles-A | | | | | Yes | | Yes | Yes | Yes | Yes |
| | | Boron nitride particles-B | | | | | | | | | | |
| | | Boron nitride particles-C | Yes | Yes | | | | Yes | | | | |
| | | Boron nitride particles-D | | | Yes | Yes | | | | | | |
| | Silane coupling agents (Post-addition) | | | | | | | | | | Yes | Yes |
| | Silane coupling agents (Pre-treatment) | | | | | | | | | | | |
| | Types of materials for forming silica coating | Organic silicone compounds-A | | Yes | | Yes | Yes | Yes | | Yes | | Yes |
| | Heating (calcination) conditions in second step | Heat treatment temperature (°C) | | 650 | | 650 | 800 | 800 | | 650 | | 650 |
| | | Heat treatment time (h) | | 1.5 | | 1.5 | 3 | 1.5 | | 1.5 | | 1.5 |

(continued)

| Items | | | Comparative Example 5 | Example 6 | Comparative Example 6 | Example 7 | Example 8 | Example 9 | Comparative Example 7 | Example 10 | Comparative Example 8 | Example 11 |
|---|---|---|---|---|---|---|---|---|---|---|---|---|
| | Properties | Content of silicon atoms (ppm by mass) | 557 | 1294 | 251 | 1150 | 640 | 1350 | 143 | 634 | | 729 |
| | | Mass of silicon atoms per surface area (μg/m$^2$) | | 82 | | 219 | 110 | 88 | | 109 | | 130 |
| | | Content of carbon atoms (ppm by mass) | | 100 | | 410 | 340 | 100 | | 340 | | 340 |
| | | Moisture resistant ammonia concentration (mg/L) | 45 | 16 | 35 | 19 | 5 | 10 | 20 | 9 | 21 | 9 |
| Epoxy resin sheets | Compositions (parts by mass) | Particles | 100.0 | 100.0 | 100.0 | 100.0 | 100.0 | 100.0 | | | | |
| | | Epoxy resin | 69.6 | 69.6 | 31.0 | 31.0 | 31.0 | 69.6 | | | | |
| | | High molecular weight components | 7.7 | 7.7 | 3.4 | 3.4 | 3.4 | 7.7 | | | | |
| | Content of particles (vol%) | | 40.0 | 40.0 | 60.0 | 60.0 | 60.0 | 40.0 | | | | |
| | Peeling strength (kN/mm) | | 2.7 | 3.7 | 1.6 | 1.9 | 2.3 | 3.8 | | | | |
| | Thermal conductivity (W/m/K) | | 5.8 | 6.2 | 13.0 | 14.0 | 14.0 | 6.4 | | | | |

(continued)

| Items | | | Comparative Example 5 | Example 6 | Comparative Example 6 | Example 7 | Example 8 | Example 9 | Comparative Example 7 | Example 10 | Comparative Example 8 | Example 11 |
|---|---|---|---|---|---|---|---|---|---|---|---|---|
| Silicone resin sheets | Compositions (parts by mass) | Particles | | | | | | | 100.0 | 100.0 | 100.0 | 100.0 |
| | | Silicone resin | | | | | | | 102.8 | 102.8 | 102.8 | 102.8 |
| | Content of particles (vol%) | | | | | | | | 30.0 | 30.0 | 30.0 | 30.0 |
| | Peeling strength (kN/mm) | | | | | | | | 3.0 | 4.3 | 2.9 | 4.1 |
| | Thermal conductivity (W/m/K) | | | | | | | | 1.6 | 1.7 | 1.6 | 1.7 |

## Claims

1. A method of manufacturing a silica-coated boron nitride particle including a boron nitride particle and a silica coating covering the surface of the boron nitride particle, the method comprising:

   a first step of covering the surface of the boron nitride particle with an organic silicone compound including a structure represented by the following formula (1):

   [Chem. 1]

   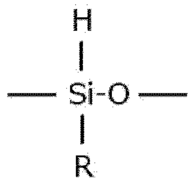

   · · · (1)

   wherein in the formula (1), R is an alkyl group having a carbon number of 4 or less; and
   a second step of heating the boron nitride particle covered with the organic silicone compound at a temperature of 500°C or more and 1000°C or less,
   wherein the content of carbon atoms in the silica-coated boron nitride particle is 1000 ppm by mass or less.

2. The method of manufacturing a silica-coated boron nitride particle according to claim 1, wherein a value of the mass (μg) of silicon atoms per $m^2$ of the surface area of the boron nitride particle is 50 or more and 500 or less ($\mu g/m^2$), the value being obtained by dividing the mass of silicon atoms (ppm by mass) at the surface of the silica-coated boron nitride particle by a BET specific surface area ($m^2/g$) of a boron nitride particle before coated with silica.

3. The method of manufacturing a silica-coated boron nitride particle according to claim 1 or 2, wherein the first step is performed by a dry mixing method or a gas phase adsorption method.

4. The method of manufacturing a silica-coated boron nitride particle according to any one of claims 1 to 3, wherein the first step is performed under an atmosphere including no oxygen gas.

5. The method of manufacturing a silica-coated boron nitride particle according to any one of claims 1 to 4, wherein the organic silicone compound including a structure represented by the formula (1) includes at least one of a compound represented by the following formula (2) and a compound represented by the following formula (3):

   [Chem. 2]

   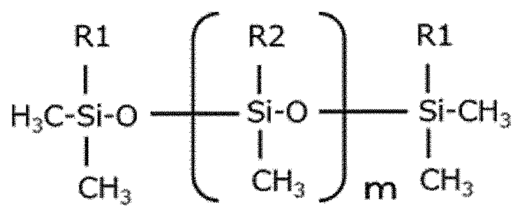

   · · · (2)

   wherein in the formula (2), R1 and R2 are each independently a hydrogen atom or a methyl group, and at least one of R1 and R2 is a hydrogen atom, and m is an integer of 0 to 10;

[Chem. 3]

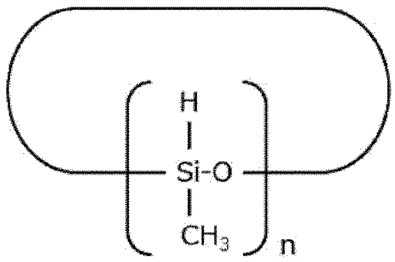

・・・(3)

wherein in the formula (3), n is an integer of 3 to 6.

**6.** The method of manufacturing a silica-coated boron nitride particle according to any one of claims 1 to 5, wherein the first step is performed under a temperature condition of 10°C or more and 200°C or less.

**7.** A method of manufacturing a heat dissipating resin composition, the method comprising a step of manufacturing silica-coated boron nitride particles by the method of manufacturing a silica-coated boron nitride particle according to any one of claims 1 to 6, and a mixing step of mixing the silica-coated boron nitride particles with a resin.

**8.** A silica-coated boron nitride particle including a boron nitride particle and a silica coating covering the surface of the boron nitride particle,
wherein the content of carbon atoms is 1000 ppm by mass or less.

**9.** The silica-coated boron nitride particle according to claim 8, wherein a value of the mass (μg) of silicon atoms per $m^2$ of the surface area of the boron nitride particle is 50 or more and 500 or less (μg/$m^2$), the value being obtained by dividing the mass of silicon atoms (ppm by mass) at the surface of the silica-coated boron nitride particle by a BET specific surface area ($m^2$/g) of a boron nitride particle before coated with silica.

FIG. 1

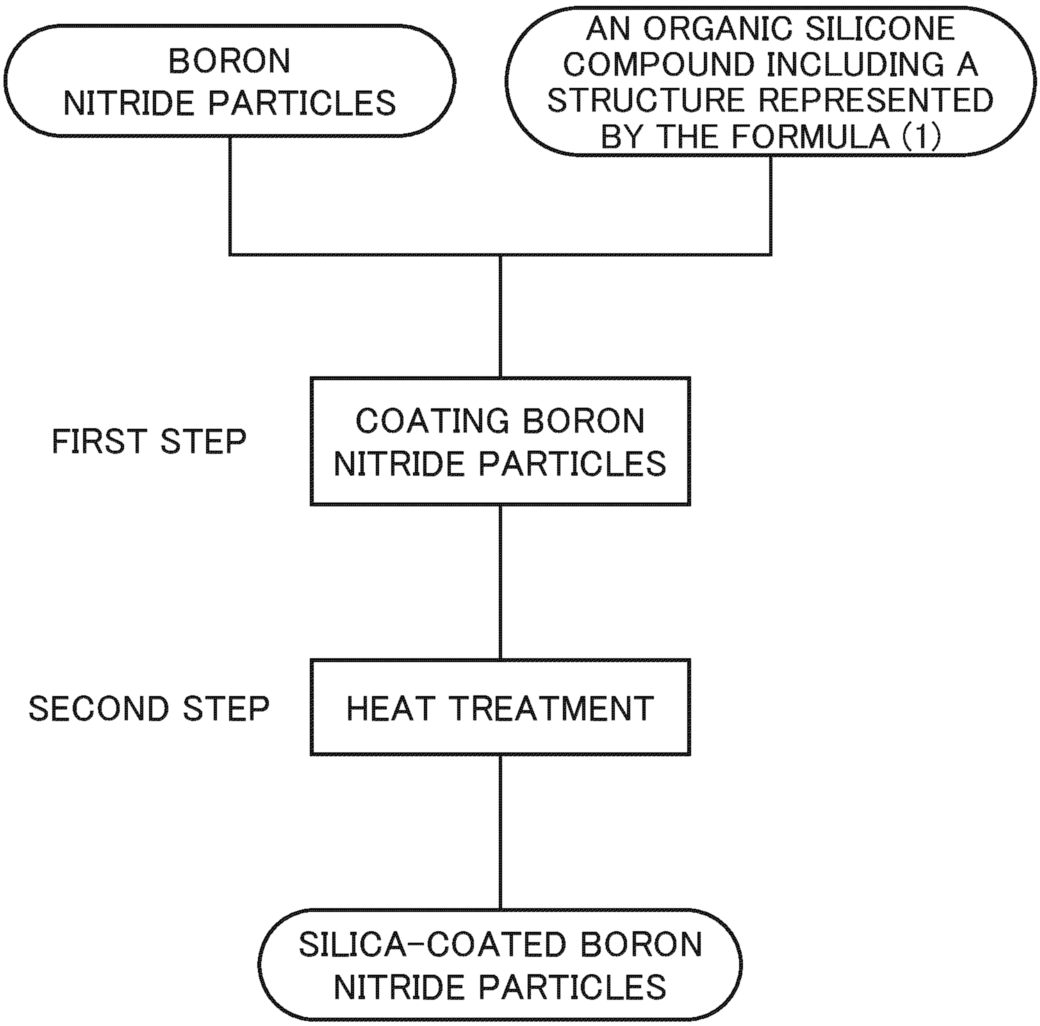
BORON NITRIDE PARTICLES
AN ORGANIC SILICONE COMPOUND INCLUDING A STRUCTURE REPRESENTED BY THE FORMULA (1)
FIRST STEP
COATING BORON NITRIDE PARTICLES
SECOND STEP
HEAT TREATMENT
SILICA-COATED BORON NITRIDE PARTICLES

**INTERNATIONAL SEARCH REPORT**

International application No. PCT/JP2020/026814

A. CLASSIFICATION OF SUBJECT MATTER
Int.Cl. C01B21/064(2006.01)i, C08K9/06(2006.01)i, C08L101/00(2006.01)i
FI: C01B21/064M, C08K9/06, C08L101/00

According to International Patent Classification (IPC) or to both national classification and IPC

B. FIELDS SEARCHED

Minimum documentation searched (classification system followed by classification symbols)
Int.Cl. C01B21/064, C08K9/06, C08L101/00

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
JSTPlus/JST7580/JSTChina(JDreamIII)

C. DOCUMENTS CONSIDERED TO BE RELEVANT

| Category* | Citation of document, with indication, where appropriate, of the relevant passages | Relevant to claim No. |
|---|---|---|
| X | Chemistry of Materials, 2000, vol. 12, pp. 3472-3480, abstract, I. Introduction, II. Experimental section | 8, 9 |
| X | US 2016/0304346 A1 (HOHAI UNIVERSITY) 20.10.2016 (2016-10-20), paragraphs [0024]-[0029] | 8 |
| A | JP 2016-141808 A (LG INNOTEC CO., LTD.) 08.08.2016 (2016-08-08), examples | 1-9 |
| A | CN 109880372 A (UNIV SOUTH CHINA TECH) 14.06.2019 (2019-06-14), examples | 1-9 |
| A | JP 2016-146464 A (TDK CORPORATION) 12.08.2016 (2016-08-12), examples | 1-9 |
| A | JP 2008-94701 A (MOMENTIVE PERFORMANCE MATERIALS INC.) 24.04.2008 (2008-04-24), examples | 1-9 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.09.2020 | 24.09.2020 |
| Name and mailing address of the ISA/ Japan Patent Office 3-4-3, Kasumigaseki, Chiyoda-ku, Tokyo 100-8915, Japan | Authorized officer<br>Telephone No. |

Form PCT/ISA/210 (second sheet) (January 2015)

**INTERNATIONAL SEARCH REPORT**
Information on patent family members

International application No.
PCT/JP2020/026814

| | | |
|---|---|---|
| US 2016/0304346 A1 | 20.10.2016 | WO 2016/023200 A1<br>CN 104177091 A<br>KR 10-2016-0091922 A |
| JP 2016-141808 A | 08.08.2016 | US 2016/0222195 A1<br>examples<br>EP 3050918 A1<br>KR 10-2016-0093476 A<br>CN 106146889 A |
| CN 109880372 A | 14.06.2019 | (Family: none) |
| JP 2016-146464 A | 12.08.2016 | US 2016/0225503 A1<br>examples<br>EP 3051545 A1<br>CN 105845384 A<br>KR 10-2016-0094860 A |
| JP 2008-94701 A | 24.04.2008 | US 2008/0076856 A1<br>examples<br>EP 1908802 A1<br>CN 101157770 A<br>KR 10-2008-0032583 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016127046 A
- JP 4070345 B
- JP 2012056818 A
- JP 2015071730 A
- JP 2018030752 A
- JP 5074012 B